(19)

Europäisches
Patentamt

European
Patent Office

Office européen
des brevets

(11)  **EP 3 379 407 B1**

(12)  **EUROPEAN PATENT SPECIFICATION**

(45) Date of publication and mention
of the grant of the patent:
**27.05.2020   Bulletin 2020/22**

(51) Int Cl.:
***G06F 7/556*** *(2006.01)*

(21) Application number: **17161901.8**

(22) Date of filing: **20.03.2017**

(54) **EMBEDDED SYSTEM, COMMUNICATION UNIT AND METHOD FOR IMPLEMENTING AN EXPONENTIAL COMPUTATION**

EINGEBETTETES SYSTEM, KOMMUNIKATIONSEINHEIT UND VERFAHREN ZUR IMPLEMENTIERUNG EINER EXPONENTIELLEN BERECHNUNG

SYSTÈME INTÉGRÉ, UNITÉ DE COMMUNICATION ET PROCÉDÉ DE MISE EN ŒUVRE D'UN CALCUL EXPONENTIEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.09.2018   Bulletin 2018/39**

(73) Proprietor: **NXP B.V.**
**5656 AG Eindhoven (NL)**

(72) Inventor: **JACOB, Naveen**
**Redhilll, Surrey RH1 1QZ (GB)**

(74) Representative: **Lee, Candice Jane**
**NXP SEMICONDUCTORS**
**Intellectual Property Group**
**Abbey House**
**25 Clarendon Road**
**Redhill, Surrey RH1 1QZ (GB)**

(56) References cited:
**US-A1- 2009 037 504     US-A1- 2013 054 665**
**US-A1- 2016 124 709**

• **Anonymous: "Exponential calculation | AVR Freaks", , 1 September 2009 (2009-09-01), XP055401516, Retrieved from the Internet: URL:http://www.avrfreaks.net/forum/exponen tial-calculation [retrieved on 2017-08-28]**
• **Anonymous: "Fixed Point implementation of C exponent function | Coding Forums", , 1 March 2010 (2010-03-01), XP055401565, Retrieved from the Internet: URL:https://www.thecodingforums.com/thread s/fixed-point-implementation-of-c-exponent -function.717009/ [retrieved on 2017-08-28]**
• **MACIEJ WIELGOSZ ET AL: "Highly Efficient Structure of 64-Bit Exponential Function Implemented in FPGAs", 26 March 2008 (2008-03-26), RECONFIGURABLE COMPUTING: ARCHITECTURES, TOOLS AND APPLICATIONS; [LECTURE NOTES IN COMPUTER SCIENCE], SPRINGER BERLIN HEIDELBERG, BERLIN, HEIDELBERG, PAGE(S) 274 - 279, XP019101658, ISBN: 978-3-540-78609-2 * section 2 ***

**EP 3 379 407 B1**

**Description**

**Field of the invention**

The field of the invention relates to an embedded system, a communication unit, and method for implementing an accurate and faster evaluation of an exponential computation. The invention is applicable to, but not limited to, a method for implementing an exponential computation in a Digital Radio Mondiale (DRM) communication unit.

**Background of the invention**

Digital Radio Mondiale (DRM) is an international standard for radio broadcasts at frequencies below 30 MHz described in 'DRM: System Specification, ETSI ES 201 980 V4.1.1 (2014-01)'. One of the challenges in implementing a DRM application in a communication unit is the implementation of an exponential computation, for example as part of a channel estimation calculation. Other applications that require exponent calculation include control systems, audio signal processing, and image processing, etc.

Such exponential computed values need to be evaluated at run-time in a physical layer implementation of a software digital radio unit (and by other signal processing or mathematical software). When exponential values are required in a digital processing-based system, the exponential functions are implemented in mathematical libraries, such as a Taylor Series expansion using floating point library maths. Such a Taylor series expansion converges faster for exponentials that are smaller than '1'. So, in a generalized case, the exponential computation is performed as follows:

$$x = x1 + x2; \hspace{3cm} [1]$$

where:

x is, say, a 16 bit number (e.g. bit15 to bit0); and
x1 = x & 0xF000, say a 4 bit integer part
x2 = x & 0x0FFF, say a 12 bit fractional part

The Exponential of 'x' is then computed as: exp(x1)*exp(x2); where exp(x1) is derived from a look-up table (LUT) value and exp(x2) is derived from a Taylor series expansion. US,9,128,790 B2 describes a DSP employing an instruction set with an exponential function that uses a single LUT approach to obtain a higher precision, by implementing a few bits of the integer part of the exponential computation and a Taylor Series to compute the fractional part, in order to, essentially, convert the input data to a power-of-2 domain solution.

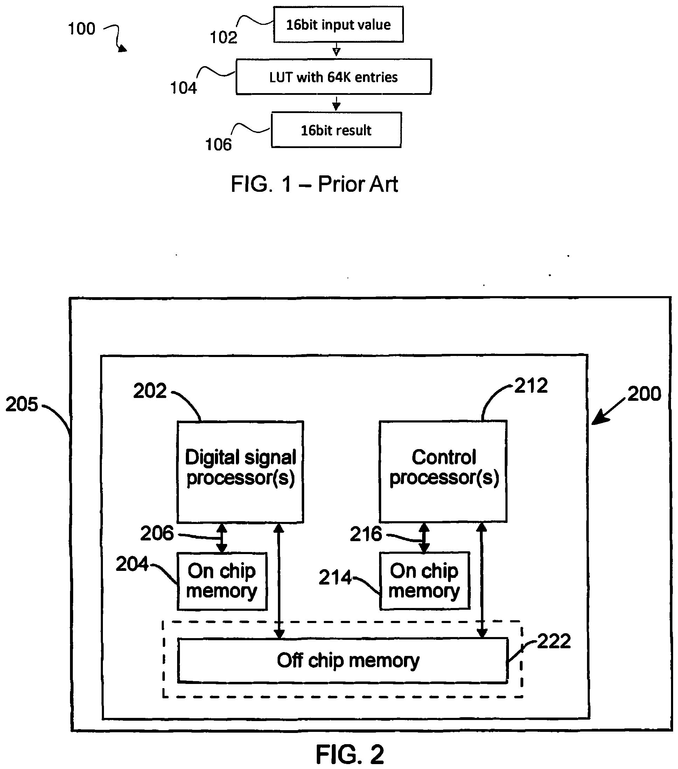

FIG. 1 illustrates a known optimal (full) LUT based implementation 100 of an exponential function on a DSP. The full LUT based implementation 100 is an optimal solution to a problem of finding an exponential value. The full LUT based implementation 100 includes receiving a 16 bit data input at 102, calculating an exponential function using a Taylor series expansion and a LUT with 64KB entries at 104 and outputting a 16 bit result of the exponential function at 104. Such a known full LUT implementation is difficult to justify the cost for, in embedded systems, primarily due to this large 64k entry LUT memory requirement (i.e. requiring a 64 KB for the case of calculating a 16-bit exponential value). A document (found at http://www.avrfreaks.net/forum/exponential-calculation and identified as XP055401516), discusses techniques for calculating exponentials. Thus, a solution for a less expensive and faster evaluation of an exponential computation for an efficient DSP implementation is desired, which substantially results in a similar, or acceptable within the targeted application, exponential value computation accuracy.

**Summary of the invention**

The present invention provides an embedded system, a communication unit and an exponential computation method therefor, as described in the accompanying claims. Specific embodiments of the invention are set forth in the dependent claims. These and other aspects of the invention will be apparent from, and elucidated with reference to, the embodiments described hereinafter.

**Brief description of the drawings**

Further details, aspects and embodiments of the invention will be described, by way of example only, with reference to the drawings. In the drawings, like reference numbers are used to identify like or functionally similar elements. Elements in the figures are illustrated for simplicity and clarity and have not necessarily been drawn to scale.

FIG. 1 illustrates an example flowchart of an operation for implementing a known, optimal, full LUT based implementation for calculating an exponential value on a DSP.

FIG. 2 illustrates an example of a block diagram of a communication unit, which in the illustrated example includes a software radio receiver and/or transmitter arrangement, according to example embodiments of the invention.

FIG. 3 illustrates an example of a block diagram of a generic exponential function implementation on a processor, according to example embodiments of the invention.

FIG. 4 illustrates an example of a reduced-size LUT based exponential implementation for the case of a 16-bit input data value split into subsets of 4-bits, according to example embodiments of the invention.

FIG. 5 illustrates an example of a generalized block diagram of reduced-size LUT based exponential implementation for a case of N-bit data input value split into 'm' subsets of bit length n1, n2, .. nm respectively, according to example embodiments of the invention.

**Detailed description**

Although examples of the invention are described with reference to a DRM radio unit, it is envisaged that the concepts herein described are applicable to any system where mathematical operations of an exponential computation are required. Examples of such applications include most wireless communication systems, software radio, radar applications, control units for control systems, image processing units and systems, audio signal processing units and systems, etc. Although examples of the invention are described with reference to a signal processor in a DRM radio unit, it is envisaged that, in other examples, the circuits and concepts herein described may be equally applied, in general, to any embedded system. Furthermore, it is envisaged that examples of the invention are not limited to a software defined radio as described, but that the exponential computation concepts may find equal applicability in any audio, video, radar, or other communication/entertainment systems. Examples of the invention are described with reference to an exponential computation implementation in a single instruction, multiple data (SIMD) vector processor, which is a class of parallel computers with multiple processing elements that perform the same operation on multiple data points simultaneously. However, it is envisaged that in other examples, the circuits and concepts herein described may be equally applied to other processors that operate with multiple processing elements.

Examples of a first aspect of the present invention provide an embedded system that includes: a processing circuit comprising at least one processor configured to support an exponential computation; and a plurality of look-up tables, LUTs, where the LUTs are of a size less than $2^N$ and contain a plurality of exponential values. The processing circuit is configured to: receive the input data; parse the input data into a plurality of subsets of data; extract respective exponential values from the plurality of LUTs associated with the respective data subset; and multiply the plurality (m) of extracted exponential values to produce an exponential computation of the N-bit input data. Examples of a second aspect of the invention describe a communication unit, such as a DRM radio unit, that includes a processor circuit as described in the first aspect.

In this manner, an embedded system, and/or a communication unit (and method) are described whereby the use of input data parsed into a plurality of subsets of data and use of associated reduced-size LUTs containing exponential values and, which when multiplied, results in a less expensive and faster evaluation of an exponential computation. Advantageously, the proposed technique for an exponential value computation results in a minimal loss of accuracy, and yields significant memory and processing savings, e.g. for a DSP implementation.

In some examples, the the plurality of LUTs may be of an equal size, such that the input data is parsed into a plurality of equal bit-length subsets of data, such that the processing circuit multiplies the plurality (m) of extracted equal bit-length exponential values. In this manner, the use of equal bit-length subsets of data may provide an optimal accuracy, due to the evenly distributed parsing of the input data.

In some examples, the plurality of LUTs may be of an equal size, such that the input data is parsed into a plurality of unequal bit-length subsets of data, such that the processing circuit multiplies the plurality (m) of extracted unequal bit-length exponential values. In this manner, the use of unequal bit-length subsets of data may provide flexibility of data handling for irregular bit lengths of input data.

In some examples, the plurality of LUTs may be of non power-of-two bit lengths, such that the input data is parsed into a plurality of non power-of-two bit length subsets of data and the processing circuit multiplies the plurality (m) of extracted non power-of-two bit-length exponential values. In this manner, the use of non power-of-two bit length subsets of data may also provide flexibility of data handling for irregular bit lengths of input data.

In some examples, the processing circuit may be configured to normalise the multiplied plurality (m) of extracted exponential values. In some examples, the processing circuit may be configured to output a normalised exponential value and a variable that indicates a number of shift operations used in a normalization process. In this manner the output result of the normalised exponential computation value, along with the additional variable, will convey the true value of the exponential value of the input data.

In some examples, the processing circuit may be configured to determine at least one of: a number of subsets to use and a configuration of the bit lengths per subsets. In some examples, the processing circuit may be configured to determine at least one of: a number of subsets to use and a configuration of the bit lengths per subsets using at least one of: data analysis of the input data, an overall required LUT size, a supported processor bit-length. In this manner, a flexible arrangement for performing an exponential computation is supported.

In some examples, the embedded system further includes a memory, operably coupled to the processing circuit, wherein the memory is configured to store at least one of the following: N-bit input data, the at least one LUT, an exponential calculation program, a result of an exponential computation.

Examples of a third aspect of the present invention provide a method for an embedded system to support an exponential computation, wherein the embedded system comprises a processing circuit, a memory, for receiving and storing at least N-bit input data and a plurality of look-up tables, LUTs, where the LUTs are of a size less than $2^N$ and contain a plurality of exponential values. The method includes: receiving the N-bit input data; parsing the N-bit input data into a plurality of subsets of data; extracting respective exponential values from the plurality of LUTs associated with the respective data subset; and multiplying the plurality (m) of extracted exponential values to produce an exponential computation of the N-bit input data.

In examples of the invention, a plurality of reduced-size of a full look-up table are used to implement an exponential computation, whereby the exponential of, say, a 16 bit value is represented in a plurality of look-up tables (LUTs) of a size that is significantly less than the standard LUT way of realizing the same exponential value for a 16-bit input with a LUT of 64K entries ($2^{16}$). In examples of the invention, the LUTs are of a size that is less (and generally significantly less) than $2^N$, where N is the number of bits of the input data signal. Also, examples of the invention provide a result of good-accuracy along with a faster processing time. Hence, the disclosed method of realization and architecture of an exponential computation is very desirable for systems with limited processing power and that demand high precision results.

In some examples, a fixed-point implementation may be employed, which means an implementation with a fixed bit-length for its processing units. The data for processing is expressed in a fixed number of bits - as integers. In fixed-point architectures, additional units, such as multipliers, etc., will each be 16 bits wide or 32 bits wide. However, a floating-point processor on the other hand represents numbers in a different floating point format, by which it will have a precision much higher than 16 bits or 32 bits.

The known 16-bit LUT will have no errors for a case where the result of an exponential computation is represented in 16-bits, as a 16-bit accurate result may be provided. However, such a 16-bit LUT needs a memory of 64K values ($2^{16}$ = 64K). Therefore, in examples of the invention, for example one that uses a fixed-point DSP processor implementation of an exponential computation, a series of reduced-size LUTs is used. These reduced-size LUTs are used together with approximations performed using mathematical functions, such as a Taylor series. The LUTs contain exponential values of the part of the bits it represents. Although using reduced-size LUTs, and such approximations, introduces some errors in the exponential computation, the disclosed method in examples of the invention has provided an accuracy close to 15 bits (in a 16-bit system with 16 bit input data). Advantageously, a loss of 1-bit precision is typically negligible compared to the memory savings (on having a set of much smaller LUTs) that is achievable when implementing the concepts herein described.

Because the illustrated embodiments of the present invention may, for the most part, be implemented using electronic components and circuits known to those skilled in the art, details will not be explained in any greater extent than that considered necessary as illustrated below, for the understanding and appreciation of the underlying concepts of the present invention and in order not to obfuscate or distract from the teachings of the present invention.

Referring first to FIG. 2, a simplified example of a block diagram of a communication unit 205 is illustrated, which includes a software communication receiver and/or transmitter arrangement, according to example embodiments of the invention. The example communication unit 205 includes an embedded system 200 with a Digital Signal Processor (DSP) circuit 202 coupled via bus 206 to on-chip memory 204. The memory is configured to store at least one of the following: N-bit input data, the at least one LUT, an exponential calculation program, a result of an exponential computation. The DSP circuit 202 contains the software and specialized functional units (e.g. hardware) to realize the signal processing functions, including dealing with the propagation effects of, say, the received wireless signal, and any receiver distortions/impairments to be removed or corrected to the best possible extent, and obtaining the actual desired data (e.g. audio, text, or video). The example communication unit 205 also includes one or more control processor circuit(s) 212 coupled via bus 216 to further on-chip memory 214. The control processor 212 typically operates on the data forwarded to it by the DSP circuit 202 and displays the necessary information(s), for example as selected by the user. Also the control processor 212 is responsible for the overall control of the system, for example by sending commands to DSP circuit 202 on the activities that it should perform, as well as addressing the users commands, for example as exercised though a graphical user interface or keyboard or liquid crystal display (LCD) etc. (not shown). In some examples, off-chip memory 222 may also be connected to the DSP circuit 202 and/or the one or more Control Processor circuit(s) 212.

Typically, all communication receivers include a DSP circuit 202 in order to implement the software for channel equalization, which usually requires an exponential function computation. In example of the invention, the DSP circuit 202 may include one or more DSPs and be configured to contain the software and specialized functional units (hardware) to realize an improved exponential computation algorithm. However, in other examples, the DSP circuit 202 may be replaced by the, or a further, control processor circuit 212 that is configured to implement the improved exponential computation algorithm. Examples of the inventive concept, as described in FIG's 4 and 5, provide an efficient realization of an exponential computation, which is important for the overall system design and where the exponential computation is accurate and determined faster than the traditional approach in using solely mathematical libraries to obtain exponential values.

A skilled artisan will appreciate that the level of integration of receiver circuits or components may be, in some instances, implementation-dependent. Furthermore, a signal processor in the transmit chain of communication unit 205 may be implemented as distinct from a signal processor in the receive chain. Alternatively, a single processor, such as DSP 202 in FIG. 2, may be used to implement a processing of both transmit and receive signals. Clearly, the various components within the communication unit 205 can be realized in discrete or integrated component form, with an ultimate structure therefore being an application-specific or design selection and that other components, circuits and functions of a typical communication unit (such as radio frequency amplification, generation, filtering, etc. components and circuits) are not shown for clarity purposes only.

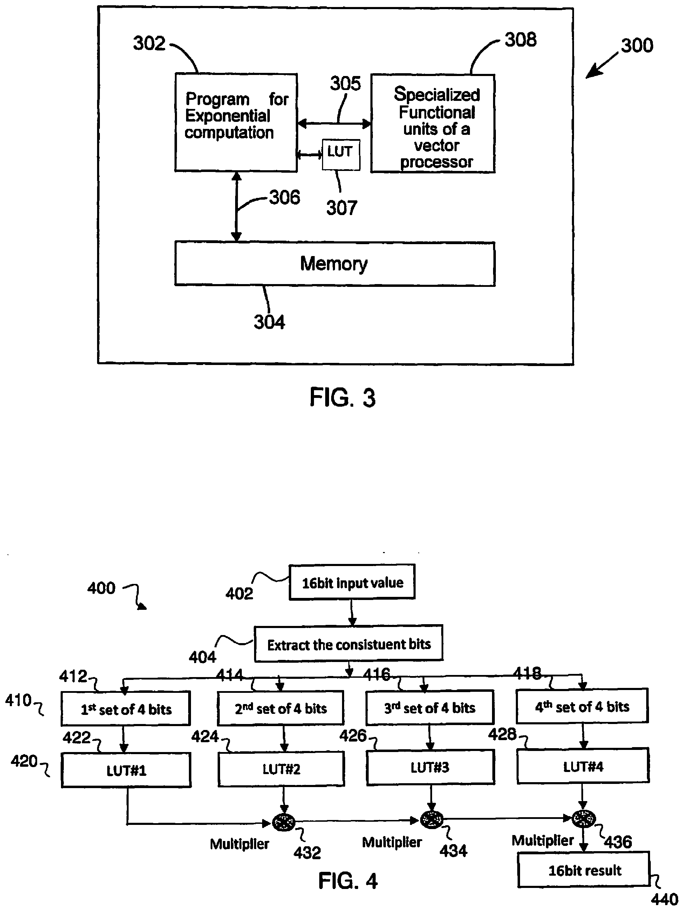

Referring now to FIG. 3, an example of a block diagram of an embedded system that includes a DSP, such as DSP 202 from FIG. 2 and is configured to support an implementation of an exponential computation, is illustrated according to example embodiments of the invention. In some examples, the processor in the embedded system may be implemented in a communication unit. In DSP 202, an example software program 302 is configured to realize the exponential computation for the data fetched from the memory 304, such as on-chip memory 204, 214 of FIG. 2 via respective buses 306, 307. In some examples, the example software program 302 may be a general software program that can be run on a processor or an optimized routine written in the language/ instruction(s) specific to the digital signal processor. In some examples, the example software program 302 may be implemented in firmware.

The example software program 302 configured to realize the exponential computation is also configured to load to or extract data from look-up table 307. The example software program 302 configured to realize the exponential computation is also configured to provide exponential computation data to specialised functional units of a vector processor 308, such as a single instruction, multiple data (SIMD) vector processor.

In accordance with examples of the invention, a value of an exponential function occupies a wide dynamic range. In accordance with examples of the invention, the term 'dynamic range' provides a measure of the range of values that a variable can represent, such that: dynamic range of a variable = maximum value of the variable - minimum value of the variable. For a system with finite precision (e.g. there exists a constraining bit length), the best performance is achieved when it is evaluated, for example to the closest least significant bit, as any error will reside in the LSBs. The exponential function is given in equation [2]:

$$exp(x) = exp(x_1 + x_2 + .. + x_N) \ where \ x = x_1 + x_2 + .. + x_N = exp(x_1)exp(x_2)..exp(x_N) \qquad [2]$$

For example in a case of a 16-bit representation of exponential value 'x', examples of the invention propose to split the 16-bit representation of an exponential value 'x' into a multiplication of fewer exponential values, namely a subset of exponential values. In this example, the 16-bit representation of an exponential value 'x' is split into a multiplication of a subset of four 4-bit exponentials, as illustrated in equation [3]:

$$exp(x) = exp(x_1)exp(x_2)exp(x_3)exp(x_4) \qquad [3]$$

In this example of the invention, each 4-bit exponential can then be realized with a smaller look-up table (LUT) having (2^4) 16-entries. Hence, with using 4 LUTs, which results in a total size corresponding to 64-entries; the exponential of a 16-bit value can be realized by multiplying the corresponding values in LUT, as shown in equation [4]:

$$exp(x) = LUT_1(index \ for \ x_1)LUT_2(index \ for \ x_2)LUT_3(index \ for \ x_3)LUT_4(index \ for \ x_4) \qquad [4]$$

In alternative example embodiments, this exponential function may also be split into a multiplication of equal-bit exponentials, such as two 8-bit exponentials (or four 4-bit exponentials). In further alternative example embodiments, it is envisaged that this exponential function may also be split up to eight sets of 2-bit exponentials, or split up into a mixture of 2-bit, 4-bit, 8-bit, exponentials, provided the net overall result will add up to 16bits. In yet further alternative example embodiments, it is envisaged that this function can also be split into any number of bits, and not limited to power-of-two variations, e.g. 16-bit = 3-bits + 5-bits + 2-bits + 6-bits.

In embedded systems, typically for equation [4], the individual values in the right-hand side that need to be multiplied may be better represented as similar values. It is envisaged that such representations may result in having a minimum error propagation due to successive multiplications, e.g. to minimise the multiplication error carried from one multiplication to the next multiplication. In this example four LUTs are generated from a 16-bit value by using an interleaved number sequence. For example, let us consider a 16-bit number:

$x = [b_{15}\ b_{14}\ b_{13}\ ...\ b_0]$, where $b_{15}$ is the 15th bit and $b_0$ is the 0th bit from the least significant bit of 'x'. The exponent of this number can be realized by using equation [4]. Here, x1 can be selected as: $[b_{15}\ 0\ 0\ 0\ b_{11}\ 0\ 0\ 0\ b_7\ 0\ 0\ 0\ b_3\ 0\ 0\ 0]$, x2 as $[0\ b_{14}\ 0\ 0\ 0\ b_{10}\ 0\ 0\ 0\ b_6\ 0\ 0\ 0\ b_2\ 0\ 0]$, x3 as $[0\ 0\ b_{13}\ 0\ 0\ 0\ b_9\ 0\ 0\ 0\ b_5\ 0\ 0\ 0\ b_1\ 0]$, and x4 as $[0\ 0\ 0\ b_{12}\ 0\ 0\ 0\ b_8\ 0\ 0\ 0\ b_4\ 0\ 0\ 0\ b_0]$

In alternative example embodiments, it is envisaged that this exponential function may also be split into a multiplication of other possible bit interleaved sequences. In further alternative example embodiments, it is envisaged that this exponential function may also be split up into multiple sets of unequal bit-length exponentials. For example, x1 may be configured to represent 10-bits of the 16-bit sequence, x2 to represent another 4 bits, and x3 & x4 representing one bit each of the remaining bits. In this manner, the bits are all derived from the input number 'x', whose exponential is to be computed.

Thus, a skilled artisan will appreciate that the inventive concept herein described, has enabled exponential computation to be achieved using four (in this example) small (reduced-size) LUTs of 64-entries (equivalent to 64 bytes) instead of the known direct LUT for a 16-bit exponential that uses a full LUT of size (2^16) 65536 entries. In this manner, the use of smaller exponentials provides significant benefits due to reduced memory requirements of the multiple LUTs. Also, the residual error in computation of the final exponential value, by means of multiplication (as given in equation [3]), is minimal, when the constituent sub-exponentials are represented in the best fixed-point format, thereby reducing or preferably minimizing any fixed-point representation error.

Referring now to FIG. 4 an example of an architecture and data flow 400 of a reduced LUT based exponential implementation, for the case of 16-bit input value split into subsets of 4-bits, is illustrated according to example embodiments of the invention.

The architecture and data flow 400 commences with a 16-bit input value 402, whose exponential needs to be found. In this example, the 16-bit input value 402 is split into four constituent values of a particular number of bits 404 (referred to as subsets). In this example, each subset 410 of these four subsets comprises a 4-bit length. Thus, in this manner, the 16-bit input value 402 has been parsed down into a first subset of 4-bits 412, a second subset of 4-bits 414, a third subset of 4-bits 416 and a fourth subset of 4-bits 418.

Furthermore, each of the subsets has an associated reduced-size LUT 420 of size $2^4 = 16$ entries = 32 bytes (assuming each entry is 16 bits or 2 bytes wide). Thus, in this manner, the first subset of 4-bits 412 is associated with a first reduced-size LUT 422, a second subset of 4-bits 414 is associated with a second reduced-size LUT 424, a third subset of 4-bits 416 is associated with a third reduced-size LUT 426 and a fourth subset of 4-bits 418 is associated with a fourth reduced-size LUT 428.

Thereafter, the value extracted from the first reduced-size LUT 422 is multiplied in first multiplier 432 with a value from second reduced-size LUT 424. The output from first multiple 432 is then multiplied in second multiplier 434 with a value extracted from third reduced-size LUT 426. The output from second multiple 434 is then multiplied in third multiplier 436 with a value extracted from fourth reduced-size LUT 428. In this parsing-by-four example, the output is a 16 bit exponential result 440.

In other examples of the invention, it is envisaged that the 'multiplying' concept may also be realized by performing the equivalent of multiplication by, say, means of shifting and/or addition, e.g. for the systems in which multiplication is expensive (or not readily supported), where bit shifts and/or addition provide the mathematical equivalent of multiplication. For example, a number 'n' multiplied by '5' can be realized as 'n' left shifted by 2 units followed by addition of 'n' to the left shifted value, i.e. n*5 = n<<2 + n.

It will be appreciated by a skilled person that the multiplication of constituent LUTs may lead to less accuracy than would be the case in using a full 64k LUT. However, the inventor of the present invention has identified that the 16 bit exponential result 440 is approximately equivalent to a 15-bit full LUT approach, which is more than acceptable in the vast majority of applications.

Also, in order to appreciate the processing time improvement of the examples above, let us consider the known technique of using the following Taylor series equation:

Exponential function:

$$e^x = \sum_{n=0}^{\infty} \frac{x^n}{n!} = 1 + x + \frac{x^2}{2!} + \frac{x^3}{3!} + \cdots \quad \text{for all } x$$

[5]

In order to achieve a similar accuracy to the above result one would need to use at least 10 of the above equations up to $x^{10}/10!$. Thus, the total number of multiplications required would be: 2+3+...+10 = 44. Hence, using the known Taylor series expansion to determine the exponential computation, 44 multiplications would be required to be made, compared to only four multiplications in the disclosed example that parses the 16-bit input data into four subsets of 4-bit data. This illustrates that the example method described above is approximately ten times faster than the known Taylor series expansion approach.

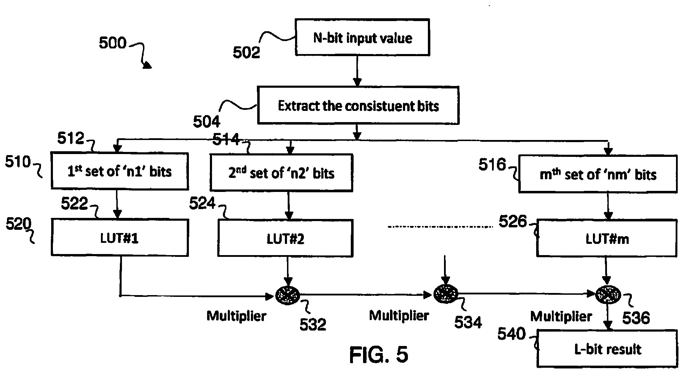

Referring now to FIG. 5, an example of a generalized block diagram of a reduced-size LUT based exponential implementation is illustrated, for the case of N-bit input data split into 'm' subsets of bit length n1, n2, .. nm respectively, according to example embodiments of the invention. Here, an exponential computation of the 'N' bit data is computed for a precision of 'L' bits. The 'N' bits are split into subsets in such a way that: N = n1 + n2 + ... + nm.

For each subset there is a corresponding reduced-size LUT, and the results derived from each reduced-size LUT is multiplied, one after the other, to obtain the final 'L' bit result. In equation [4], each of the look up tables, say LUT1 to LUT4, may have 16-bit entries where the system expects the final result to be of a 16-bit length. The right hand side of the equation LUT1 x LUT2 will provide a 16-bit x 16-bit = 32-bits result. This result is then truncated or rounded off from 32-bits to achieve 16-bits. This is repeated with multiplying by LUT3, etc. Thus, each multiplication result will have a total number of bits more than 'L'-bits; which are rounded off or truncated to deliver an 'L' bit result.

The architecture and data flow 500 commences with a 16-bit input value 502, whose exponential needs to be found. The 16-bit input value 502 is split into 'M' constituent values of a particular number of bits 504 (referred to as subsets). In this example, each set 510 of these 'M' subsets comprises a variable-bit length. Thus, in this manner, the 16-bit input value 502 has been parsed down into a first subset of n1-bits 512, a second subset of n2-bits 514, ... and so on until a Mth subset of nm-bits 516.

Each subset has an associated reduced-size LUT 520. Thus, in this manner, the first subset of n1-bits 512 is associated with a first reduced-size LUT#1 522, a second subset of n2-bits 514 is associated with a second reduced-size LUT#2 524, ... and so on until a fourth subset of nm-bits 516 is associated with a Mth reduced-size LUT#m 526.

Thereafter, the value extracted from the first reduced-size LUT#1 522 is multiplied in first multiplier 532 with a value from second reduced-size LUT#2 524. The output from first multiple 532 is then multiplied in second multiplier 534 with a value extracted from a further reduced-size LUT ... and so on. The output from the penultimate multiplier is then multiplied in final multiplier 536 with a value extracted from Mth reduced-size LUT#nm 526. In this parsing-by-M example, the output is a L-bit exponential result 540.

In another variation of the above proposal, the result 540 may be normalized to an optimum 'L' bits and an additional output variable may be achieved that will inform on the number of shifts used for a normalization process. In this manner, the L-bit result 540 along with the additional output will convey the true value.

In some examples, a decision about the number and configuration of the subsets n1, n2, ... nm may be made by using data analysis, in order to reduce any residual error in the overall result. In some examples, another criteria of selection of n1, n2, ... nm may be based on the LUT size required. In some examples, a DSP processor bit-length that is supported (e.g. the bit-length of the multiplier units) may be a criteria that is used for selection of constituent bit lengths n1, n2, ... nm.

In accordance with example embodiments, the example software program 302 is configured to make use of a much smaller LUT for an exponential computation, to provide to functional units of a vector processor. Although examples of the invention are described with reference to an efficient implementation of the algorithm on a DSP, such as DSP 202 in FIG. 2, it is envisaged that the concept herein described may be implemented in any processor that is configured to perform an exponential computation and requires this to be done using a reduced (and preferably minimum) computation overhead.

In the foregoing specification, the invention has been described with reference to specific examples of embodiments of the invention. It will, however, be evident that various modifications and changes may be made therein without departing from the scope of the invention as set forth in the appended claims and that the claims are not limited to the specific examples described above. The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals.

Those skilled in the art will recognize that the architectures depicted herein are merely exemplary, and that in fact many other architectures can be implemented which achieve the same functionality. Any arrangement of components to achieve the same functionality is effectively 'associated' such that the desired functionality is achieved. Hence, any two components herein combined to achieve a particular functionality can be seen as 'associated with' each other such that the desired functionality is achieved, irrespective of architectures or intermediary components. Likewise, any two components so associated can also be viewed as being 'operably connected,' or 'operably coupled,' to each other to achieve the desired functionality.

Furthermore, those skilled in the art will recognize that boundaries between the above described operations merely illustrative. The multiple operations may be combined into a single operation, a single operation may be distributed to additional operations and operations may be executed at least partially overlapping in time. Moreover, alternative embodiments may include multiple instances of a particular operation, and the order of operations may be altered in various other embodiments.

Also for example, in one embodiment, the illustrated examples may be implemented as circuitry located on a single integrated circuit or within a same device. Alternatively, the circuit and/or component examples may be implemented as any number of separate integrated circuits or separate devices interconnected with each other in a suitable manner. Also for example, the examples, or portions thereof, may implemented as soft or code representations of physical circuitry or of logical representations convertible into physical circuitry, such as in a hardware description language of any appropriate type. Also, the invention is not limited to physical devices or units implemented in non-programmable hardware but can also be applied in programmable devices or units able to perform the desired sampling error and compensation by operating in accordance with suitable program code, such as minicomputers, personal computers, notepads, personal digital assistants, electronic games, automotive and other embedded systems, cell phones and various other wireless devices, commonly denoted in this application as 'embedded systems'. However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms 'a' or 'an,' as used herein, are defined as one, or more than one. Also, the use of introductory phrases such as 'at least one' and 'one or more' in the claims should not be construed to imply that the introduction of another claim element by the indefinite articles 'a' or 'an' limits any particular claim containing such introduced claim element to inventions containing only one such element, even when the same claim includes the introductory phrases 'one or more' or 'at least one' and indefinite articles such as 'a' or 'an.' The same holds true for the use of definite articles. Unless stated otherwise, terms such as 'first' and 'second' are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

**Claims**

1.   An embedded system (200) comprising:

a processing circuit (202) comprising at least one processor configured to support an exponential computation of N-bit input data; and
a plurality of look-up tables, LUTs (420), where the LUTs are of a size less than 2^N and contain a plurality of exponential values;

wherein the processing circuit (202) is configured to:

receive the N-bit input data;
parse the N-bit input data into a plurality of subsets of data;
extract respective exponential values from the plurality of LUTs associated with the respective data subsets; and
multiply the plurality (m) of extracted exponential values to produce an exponential computation of the N-bit input data (440, 540),
wherein the embedded system (200) is **characterised in that** the plurality of LUTs (420) are of unequal size, such that the N-bit input data is parsed into a plurality of unequal bit-length subsets of data by using an interleaved number sequence and the processing circuit (202) multiplies the plurality (m) of extracted unequal bit-length exponential values.

2. The embedded system (200) of Claim 1 wherein the plurality of LUTs (420) comprise non power-of-two bit lengths, such that the N-bit input data is parsed into a plurality of non power-of-two bit length subsets of data and the processing circuit (202) multiplies the plurality (m) of extracted non power-of-two bit-length exponential values.

3. The embedded system (200) of any preceding Claim wherein the processing circuit (202) being configured to multiply the plurality (m) of extracted exponential values comprises the processing circuit (202) being configured to evaluate an output exponential value.

4. The embedded system (200) of any preceding Claim wherein the processing circuit (202) is further configured to normalise the multiplied plurality (m) of extracted exponential values.

5. The embedded system (200) of Claim 4 wherein the processing circuit (202) is further configured to output a normalised exponential value and a variable that indicates a number of shift operations used in a normalization process.

6. The embedded system (200) of any preceding Claim further comprising a memory (204), operably coupled to the processing circuit (202), wherein the memory is configured to store at least one of the following: N-bit input data, the plurality of LUTs an exponential calculation program, a result of an exponential computation.

7. The embedded system (200) of any preceding Claim wherein the processing circuit (202) is a single instruction, multiple data, SIMD, vector processor.

8. The embedded system (200) of any preceding Claim when used in one from a group of: a Digital Radio Mondiale, DRM, radio unit, a software radio, a control unit, an audio signal processing unit.

9. A communication unit (205) comprising:

   processing circuit (202) comprising at least one processor configured to support an exponential computation of N-bit input data; and
   a plurality of look-up tables, LUTs (420), the LUTs are of a size less than 2^N and contain a plurality of exponential values;

   wherein the processing circuit (202) is configured to:

   receive the N-bit input data;
   parse the N-bit input data into a plurality of subsets of data;
   extract respective exponential values from the plurality of LUTs associated with the respective data subsets; and
   multiply the plurality (m) of extracted exponential values to produce an exponential computation of the N-bit input data,
   wherein the communication unit (205) is **characterised in that** the plurality of LUTs (420) are of unequal size, such that the N-bit input data is parsed into a plurality of unequal bit-length subsets of data by using an interleaved number sequence and the processing circuit (202) multiplies the plurality (m) of extracted unequal bit-length exponential values.

10. The communication unit of Claim 9, wherein the communication unit is a Digital Radio Mondiale, DRM, radio unit.

11. A method (400, 500) for an embedded system (200) to support an exponential computation, wherein the embedded system (200) comprises a processing circuit (202), a memory (204), for receiving and storing at least N-bit input data and a plurality of look-up tables, LUTs (420), where the LUTs are of a size less than 2^N and contain a plurality of exponential values, the method comprising:

   receiving (402, 502) the N-bit input data; and
   parsing (410, 510) the N-bit input data into a plurality of subsets of data;

   wherein the method is **characterized by**:

   extracting (420) respective exponential values from the plurality of LUTs associated with the respective data subsets wherein the plurality of LUTs are of unequal size, such that the N-bit input data is parsed into a plurality of unequal bit-length subsets of data by using an interleaved number sequence; and
multiplying (430) the plurality (m) of extracted unequal bit-length exponential values to produce an exponential computation of the N-bit input data (440, 540).

**Patentansprüche**

1. Eingebettetes System (200), Folgendes umfassend:

eine Verarbeitungsschaltung (202), die mindestens einen Prozessor, der konfiguriert ist, um eine Exponentialberechnung von N-Bit-Eingabedaten zu unterstützen, umfasst; und
mehrere Look-Up-Tabellen, LUTs (420), wobei die LUTs eine Größe von unter 2^N haben und mehrere Exponentialwerte enthalten;
wobei die Verarbeitungsschaltung (202) für Folgendes konfiguriert ist:

Empfangen der N-Bit-Eingabedaten;
Parsen der N-Bit-Eingabedaten in mehrere Untermengen von Daten;
Extrahieren jeweiliger Exponentialwerte aus den mehreren LUTs, die mit den jeweiligen Datenuntermengen assoziiert sind; und
Multiplizieren der mehreren (m) extrahierten Exponentialwerte, um eine Exponentialberechnung der N-Bit-Eingabedaten (440, 540) zu produzieren,

wobei das eingebettete System (200) **dadurch gekennzeichnet ist, dass** die mehreren LUTs (420) unterschiedliche Größen haben, damit die N-Bit-Eingabedaten unter Nutzung einer verschachtelten Zahlenfolge in mehrere je unterschiedliche Bitlängen aufweisende Untermengen von Daten geparst werden und die Verarbeitungsschaltung (202) die mehreren (m) extrahierten, je unterschiedliche Bitlängen aufweisenden Exponentialwerte multipliziert.

2. Eingebettetes System (200) nach Anspruch 1, wobei die mehreren LUTs (420) Nicht-Zweierpotenz-Bitlängen umfassen, damit die N-Bit-Eingabedaten in mehrere Nicht-Zweierpotenz-Bitlänge-Untermengen von Daten geparst werden und die Verarbeitungsschaltung (202) die mehreren (m) extrahierten Nicht-Zweierpotenz-Bitlänge-Exponentialwerte multipliziert.

3. Eingebettetes System (200) nach einem vorhergehenden Anspruch, wobei die Verarbeitungsschaltung (202), die konfiguriert ist, um die mehreren (m) extrahierten Exponentialwerte zu multiplizieren, umfasst, dass die Verarbeitungsschaltung (202) konfiguriert ist, um einen ausgegebenen Exponentialwert zu bewerten.

4. Eingebettetes System (200) nach einem vorhergehenden Anspruch, wobei die Verarbeitungsschaltung (202) ferner konfiguriert ist, um die mehreren (m) extrahierten, multiplizierten Exponentialwerte zu normieren.

5. Eingebettetes System (200) nach Anspruch 4, wobei die Verarbeitungsschaltung (202) ferner konfiguriert ist, um einen normierten Exponentialwert und eine Variable, die eine Anzahl von bei einem Normierungsprozess genutzten Verschiebeoperationen angibt, auszugeben.

6. Eingebettetes System (200) nach einem vorhergehenden Anspruch, das ferner einen Speicherbaustein (204), der in einer Wirkbeziehung an die Verarbeitungsschaltung (202) gekoppelt ist, umfasst, wobei der Speicherbaustein konfiguriert ist, um Folgendes zu speichern: N-Bit-Eingabedaten und/oder die mehreren LUTs und/oder ein Exponentialkalkulationsprogramm und/oder ein Ergebnis einer Exponentialberechnung.

7. Eingebettetes System (200) nach einem vorhergehenden Anspruch, wobei die Verarbeitungsschaltung (202) ein SIMD-Vektorprozessor (SIMD = Single Instruction Multiple Data) ist.

8. Eingebettetes System (200) nach einem vorhergehenden Anspruch, wenn es in einem Element aus der folgenden Gruppe genutzt wird: einer DRM-Rundfunkeinheit (DRM = Digital Radio Mondiale), einem Software-Radio, einer Steuereinheit, einer Tonsignalverarbeitungseinheit.

9. Kommunikationseinheit (205), Folgendes umfassend:

eine Verarbeitungsschaltung (202), die mindestens einen Prozessor, der konfiguriert ist, um eine Exponentialberechnung von N-Bit-Eingabedaten zu unterstützen, umfasst; und

mehrere Look-Up-Tabellen, LUTs (420), wobei die LUTs eine Größe von unter 2^N haben und mehrere Exponentialwerte enthalten;

wobei die Verarbeitungsschaltung (202) für Folgendes konfiguriert ist:

Empfangen der N-Bit-Eingabedaten;
Parsen der N-Bit-Eingabedaten in mehrere Untermengen von Daten;
Extrahieren jeweiliger Exponentialwerte aus den mehreren LUTs, die mit den jeweiligen Datenuntermengen assoziiert sind; und
Multiplizieren der mehreren (m) extrahierten Exponentialwerte, um eine Exponentialberechnung der N-Bit-Eingabedaten zu produzieren,

wobei die Kommunikationseinheit (205) **dadurch gekennzeichnet ist, dass** die mehreren LUTs (420) unterschiedliche Größen haben, damit die N-Bit-Eingabedaten unter Nutzung einer verschachtelten Zahlenfolge in mehrere je unterschiedliche Bitlängen aufweisende Untermengen von Daten geparst werden und die Verarbeitungsschaltung (202) die mehreren (m) extrahierten, je unterschiedliche Bitlängen aufweisenden Exponentialwerte multipliziert.

10. Kommunikationseinheit nach Anspruch 9, wobei die Kommunikationseinheit eine DRM-Rundfunkeinheit (DRM = Digital Radio Mondiale) ist.

11. Verfahren (400, 500) für ein eingebettetes System (200) zum Unterstützen einer Exponentialberechnung, wobei das eingebettete System (200) eine Verarbeitungsschaltung (202), einen Speicherbaustein (204) zum Empfangen und Speichern mindestens von N-Bit-Eingabedaten und mehrere Look-Up-Tabellen, LUTs (420), umfasst, wobei die LUTs eine Größe von unter 2^N haben und mehrere Exponentialwerte enthalten, wobei das Verfahren umfasst:

Empfangen (402, 502) der N-Bit-Eingabedaten; und
Parsen (410, 510) der N-Bit-Eingabedaten in mehrere Untermengen von Daten;
wobei das Verfahren durch Folgendes gekennzeichnet ist:

Extrahieren (420) jeweiliger Exponentialwerte aus den mehreren LUTs, die mit den jeweiligen Datenuntermengen assoziiert sind, wobei die mehreren LUTs unterschiedliche Größen haben, damit die N-Bit-Eingabedaten unter Nutzung einer verschachtelten Zahlenfolge in mehrere je unterschiedliche Bitlängen aufweisende Untermengen von Daten geparst werden; und
Multiplizieren (430) der mehreren (m) extrahierten, je unterschiedliche Bitlängen aufweisenden Exponentialwerte, um eine Exponentialberechnung der N-Bit-Eingabedaten (440, 540) zu produzieren.

**Revendications**

1. Système intégré (200) comprenant :

un circuit de traitement (202) comprenant au moins un processeur configuré pour prendre en charge un calcul exponentiel de données d'entrée de N bits ; et
une pluralité de tables de consultation, LUT (420), les LUT étant d'une taille inférieure à 2^N et contenant une pluralité de valeurs exponentielles ;
dans lequel le circuit de traitement (202) est configuré pour :

recevoir les données d'entrée de N bits ;
analyser syntaxiquement les données d'entrée de N bits en une pluralité de sous-ensembles de données ;
extraire des valeurs exponentielles respectives de la pluralité de LUT associées aux sous-ensembles de données respectifs ; et
multiplier la pluralité (m) de valeurs exponentielles extraites pour produire un calcul exponentiel des données d'entrée de N bits (440, 540),
le système intégré (200) étant **caractérisé en ce que** les LUT de la pluralité de LUT (420) sont de taille inégale, de telle sorte que les données d'entrée de N bits soient analysées syntaxiquement en une pluralité de sous-ensembles de données de longueurs de bits inégales en utilisant une séquence de nombres entrelacés et le circuit de traitement (202) multiplie la pluralité (m) de valeurs exponentielles de longueurs de bits inégales extraites.

2. Système intégré (200) selon la revendication 1 dans lequel la pluralité de LUT (420) comprend des longueurs de bits non de puissance deux, de telle sorte que les données d'entrée de N bits soient analysées syntaxiquement en une pluralité de sous-ensembles de données de longueur de bits non de puissance deux et le circuit de traitement (202) multiplie la pluralité (m) de valeurs exponentielles de longueurs de bits non de puissance deux extraites.

3. Système intégré (200) selon n'importe quelle revendication précédente dans lequel le circuit de traitement (202) configuré pour multiplier la pluralité (m) de valeurs exponentielles extraites comprend le circuit de traitement (202) configuré pour évaluer une valeur exponentielle de sortie.

4. Système intégré (200) selon n'importe quelle revendication précédente dans lequel le circuit de traitement (202) est configuré en outre pour normaliser la pluralité (m) multipliée de valeurs exponentielles extraites.

5. Système intégré (200) selon la revendication 4 dans lequel le circuit de traitement (202) est configuré en outre pour produire en sortie une valeur exponentielle normalisée et une variable qui indique un nombre d'opérations de décalage utilisées dans un processus de normalisation.

6. Système intégré (200) selon n'importe quelle revendication précédente comprenant en outre une mémoire (204), couplée opérationnellement au circuit de traitement (202), dans lequel la mémoire est configurée pour mémoriser au moins un des éléments suivants : des données d'entrée de N bits, la pluralité de LUT, un programme de calcul exponentiel, un résultat d'un calcul exponentiel.

7. Système intégré (200) selon n'importe quelle revendication précédente dans lequel le circuit de traitement (202) est un processeur vectoriel à instruction unique, données multiples.

8. Système intégré (200) selon n'importe quelle revendication précédente quand il est utilisé dans une unité d'un groupe : d'unité radio DRM (Digital Radio Mondiale), de radio logicielle, d'unité de commande, d'unité de traitement de signaux audio.

9. Unité de communication (205) comprenant :

un circuit de traitement (202) comprenant au moins un processeur configuré pour prendre en charge un calcul exponentiel de données d'entrée de N bits ; et
une pluralité de tables de consultation, LUT (420), les LUT étant d'une taille inférieure à 2^N et contenant une pluralité de valeurs exponentielles ;
dans lequel le circuit de traitement (202) est configuré pour :

recevoir les données d'entrée de N bits ;
analyser syntaxiquement les données d'entrée de N bits en une pluralité de sous-ensembles de données ;
extraire des valeurs exponentielles respectives de la pluralité de LUT associées aux sous-ensembles de données respectifs ; et
multiplier la pluralité (m) de valeurs exponentielles extraites pour produire un calcul exponentiel des données d'entrée de N bits,
l'unité de communication (205) étant **caractérisée en ce que** les LUT de la pluralité de LUT (420) sont de taille inégale, de telle sorte que les données d'entrée de N bits soient analysées syntaxiquement en une pluralité de sous-ensembles de données de longueurs de bits inégales en utilisant une séquence de nombres entrelacés et le circuit de traitement (202) multiplie la pluralité (m) de valeurs exponentielles de longueurs de bits inégales extraites.

10. Unité de communication selon la revendication 9, l'unité de communication étant une unité radio DRM (Digital Radio Mondiale).

11. Procédé (400, 500) pour un système intégré (200) pour prendre en charge un calcul exponentiel, dans lequel le système intégré (200) comprend un circuit de traitement (202), une mémoire (204), pour recevoir et mémoriser au moins des données d'entrée de N bits et une pluralité de tables de consultation, LUT (420), les LUT étant d'une taille inférieure à 2^N et contenant une pluralité de valeurs exponentielles, le procédé comprenant :

la réception (402, 502) des données d'entrée de N bits ; et

l'analyse syntaxique (410, 510) des données d'entrée de N bits en une pluralité de sous-ensembles de données ;

le procédé étant **caractérisé par** :

l'extraction (420) des valeurs exponentielles respectives de la pluralité de LUT associées aux sous-ensembles de données respectifs, dans lequel les LUT de la pluralité de LUT sont de taille inégale, de telle sorte que les données d'entrée de N bits soient analysées syntaxiquement en une pluralité de sous-ensembles de données de longueurs de bits inégales en utilisant une séquence de nombres entrelacés ; et

la multiplication (430) de la pluralité (m) de valeurs exponentielles de longueurs de bits inégales extraites pour produire un calcul exponentiel des données d'entrée de N bits (440, 540).

100

102 — 16bit input value

104 — LUT with 64K entries

106 — 16bit result

FIG. 1 – Prior Art

205

202 — Digital signal processor(s)

212 — Control processor(s)

200

206 — 204 On chip memory

216 — 214 On chip memory

Off chip memory — 222

FIG. 2

302 · 305 · 308 · 300

Program for Exponential computation

LUT

307

306

Specialized Functional units of a vector processor

Memory

304

## FIG. 3

400

402 · 16bit input value

404 · Extract the consistuent bits

412 · 414 · 416 · 418

410 · 1st set of 4 bits · 2nd set of 4 bits · 3rd set of 4 bits · 4th set of 4 bits

422 · 424 · 426 · 428

420 · LUT#1 · LUT#2 · LUT#3 · LUT#4

Multiplier 432 · Multiplier 434 · Multiplier 436

16bit result

440

## FIG. 4

FIG. 5

**EP 3 379 407 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9128790 B2

**Non-patent literature cited in the description**

- *DRM: System Specification, ETSI ES 201 980 V4.1.1,* January 2014